# EUROPEAN PATENT APPLICATION

(11) **EP 3 787 317 A1**
(43) Date of publication of application: **03.03.2021**
(21) Application number: 19792137.2
(22) Date of filing: 04.03.2019
(51) Int. Cl.: H04S 7/00, H04R 1/40, H04R 3/00, H04S 3/00

(54) **DISPLAY CONTROL DEVICE, DISPLAY CONTROL METHOD, AND PROGRAM**

(30) Priority: 24.04.2018 JP 2018082731
(71) Applicant: Sony Corporation, 108-0075 Tokyo (JP)
(72) Inventor: TAGUCHI, Kazuaki, Tokyo 108-0075 (JP)
(74) Representative: D Young & Co LLP
(86) International application number: PCT/JP2019/008394
(87) International publication number: WO 2019/207959

(57) **Abstract**

A display control apparatus including a display control portion configured to display, on a display portion, a position of an array speaker, a time waveform that corresponds to at least one sound source, and a trajectory indicating a variation in a localization point of the sound source in a predetermined space.

## Description

### [Technical Field]

The present disclosure relates to a display control apparatus, a display control method, and a program.

### [Background Art]

Techniques for reproducing a sound field by wavefront synthesis using an array speaker that is made up of a plurality of speaker units are proposed (for example, refer to PTL 1). Using the techniques, a dramatic effect (referred to as object audio or the like) as though a sound source is near one's ear or a dramatic effect (referred to as audio partitioning or the like) of clearly reproducing sound that differs for each area while preventing the sound from mixing with sound that is reproduced in an adjacent area can be realized.

### [Citation List]

### [Patent Literature]

### [PTL 1]

JP 2013-128314A

### [Summary]

### [Technical Problem]

In such fields, desirably, a content creator who creates video and audio (hereinafter, collectively referred to as "contents" when appropriate) can use a tool that enables intended contents to be readily created, edited, and the like.

For example, an object of the present disclosure is to provide a display control apparatus, a display control method, and a program that enable intended contents to be readily created, edited, and the like by a content creator.

### [Solution to Problem]

The present disclosure is, for example,
a display control apparatus including
a display control portion configured to display, on a display portion, a position of an array speaker, a time waveform that corresponds to at least one sound source, and a trajectory indicating a variation in a localization point of the sound source in a predetermined space.

The present disclosure is, for example, a display control apparatus including
a display control portion configured to display, on a display portion, a position of an array speaker and a plurality of reproduction areas that correspond to a plurality of sounds that are reproduced from the array speaker, wherein sizes of the reproduction areas are changeable.

The present disclosure is, for example,
a display control method including
a display control portion displaying, on a display portion, a position of an array speaker, a time waveform that corresponds to at least one sound source, and a trajectory indicating a variation in a localization point of a sound source in a predetermined space.

The present disclosure is, for example,
a program that causes a computer to execute a display control method including a display control portion displaying, on a display portion, a position of an array speaker, a time waveform that corresponds to at least one sound source, and a trajectory indicating a variation in a localization point of a sound source in a predetermined space.

### [Advantageous Effects of Invention]

According at least one embodiment of the present disclosure, intended contents can be readily created, edited, and the like by a content creator. It should be noted that the advantageous effect described above is not necessarily restrictive and any of the advantageous effects described in the present disclosure may apply. In addition, it is to be understood that contents of the present disclosure are not to be interpreted in a limited manner according to the exemplified advantageous effects.

### [Brief Description of Drawings]

[Fig. 1]

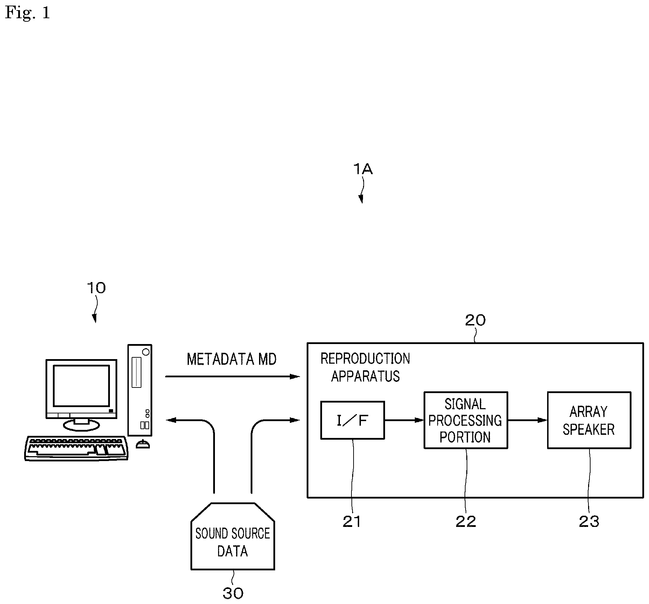

   Fig. 1 is a block diagram showing a configuration example of a reproduction system according to an embodiment.
[Fig. 2]

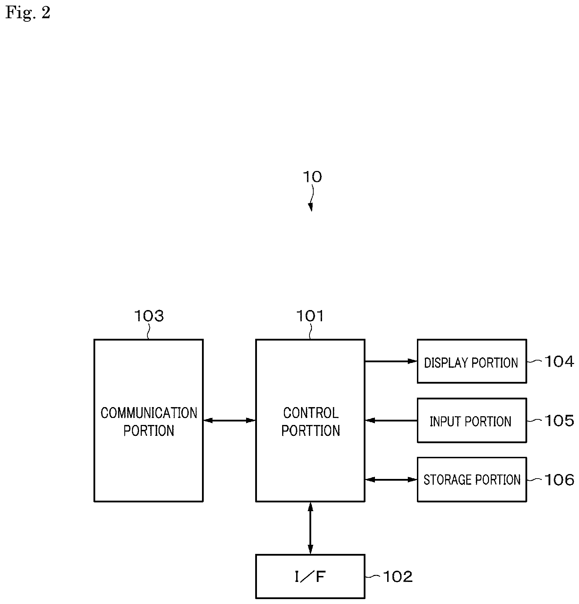

   Fig. 2 is a block diagram showing a configuration example of a personal computer according to an embodiment.
[Fig. 3]

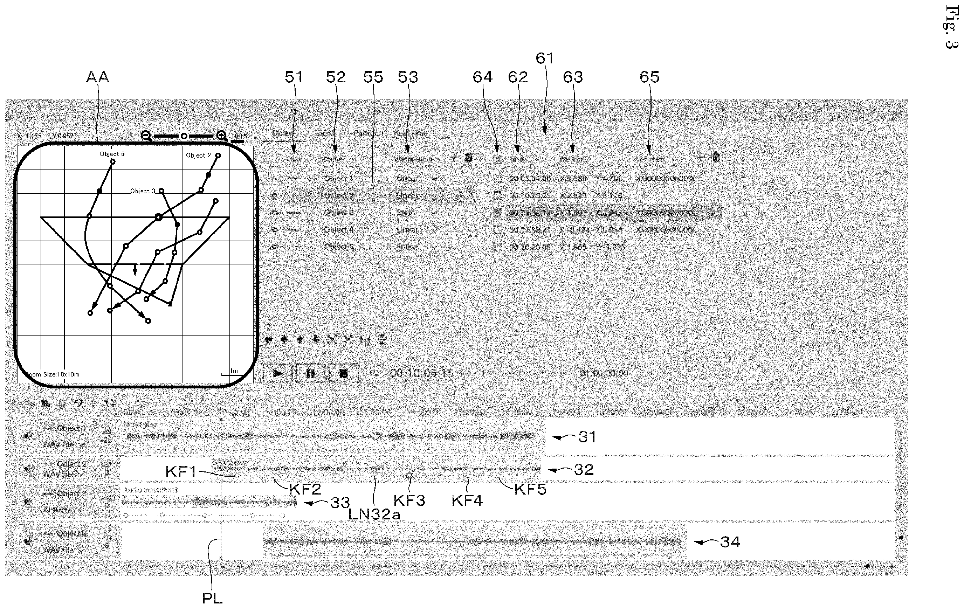

   Fig. 3 is a diagram for explaining an example of a GUI according to a first embodiment.
[Fig. 4]

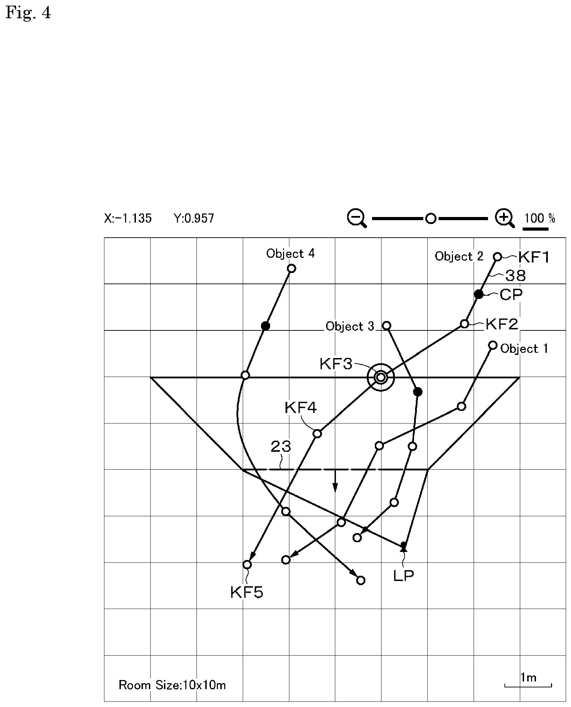

   Fig. 4 is a partial enlarged view of the GUI according to the first embodiment.
[Fig. 5]

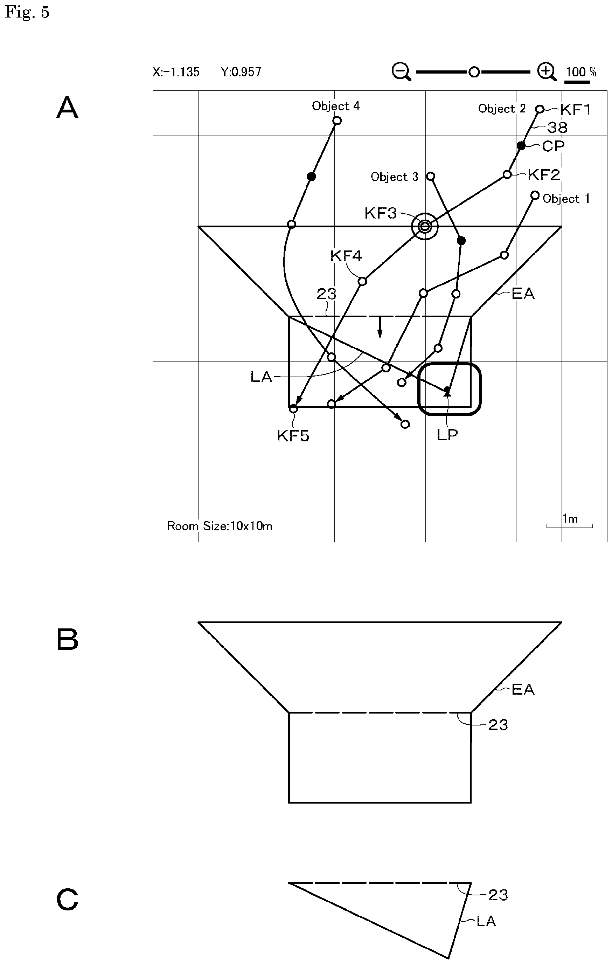

   Fig. 5A is a partial enlarged view of the GUI according to the first embodiment, Fig. 5B is a diagram for explaining an example of an effective area, and Fig. 5C is a diagram for explaining an example of a listening area.
[Fig. 6]

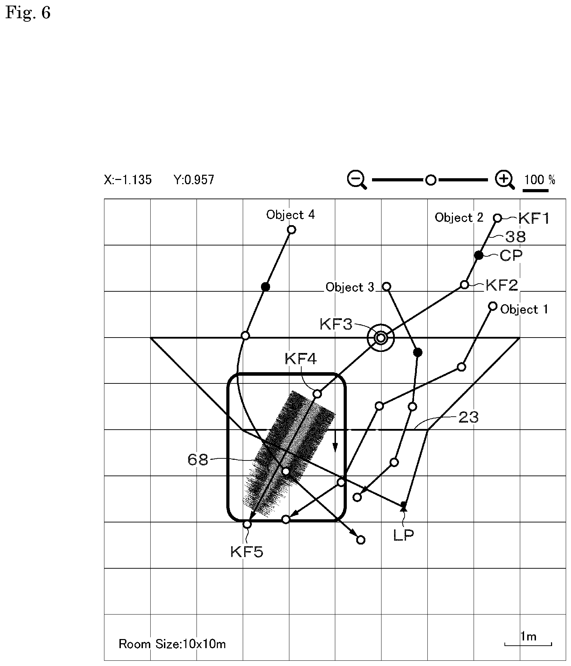

   Fig. 6 is a diagram for explaining a GUI according to a modification.
[Fig. 7]

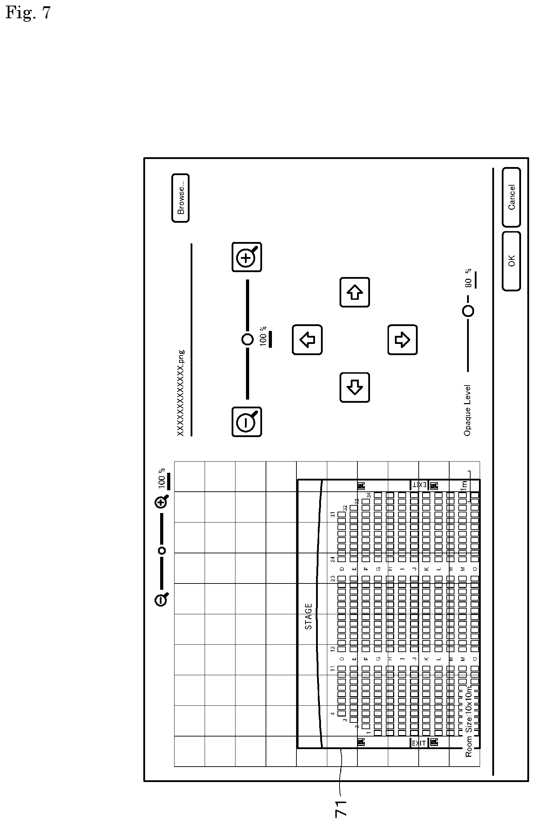

   Fig. 7 is a diagram for explaining a GUI according to a modification.
[Fig. 8]

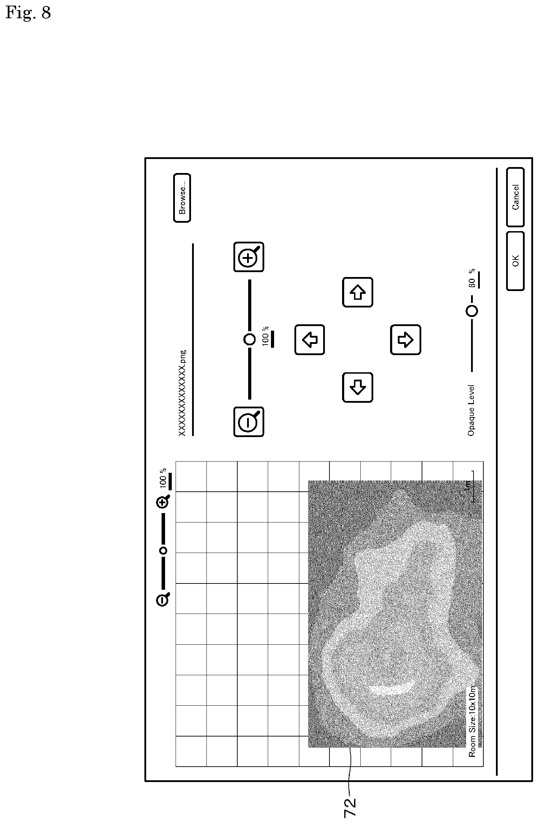

   Fig. 8 is a diagram for explaining a GUI according to a modification.
[Fig. 9]

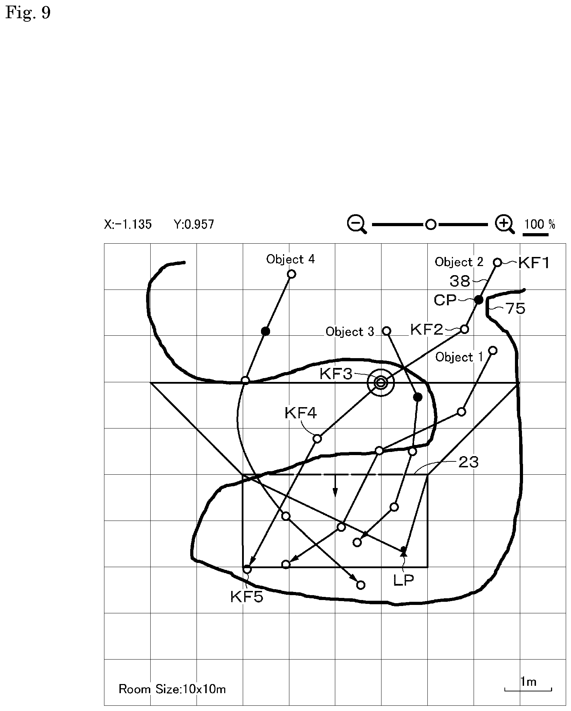

   Fig. 9 is a diagram for explaining a GUI according to a modification.
[Fig. 10]

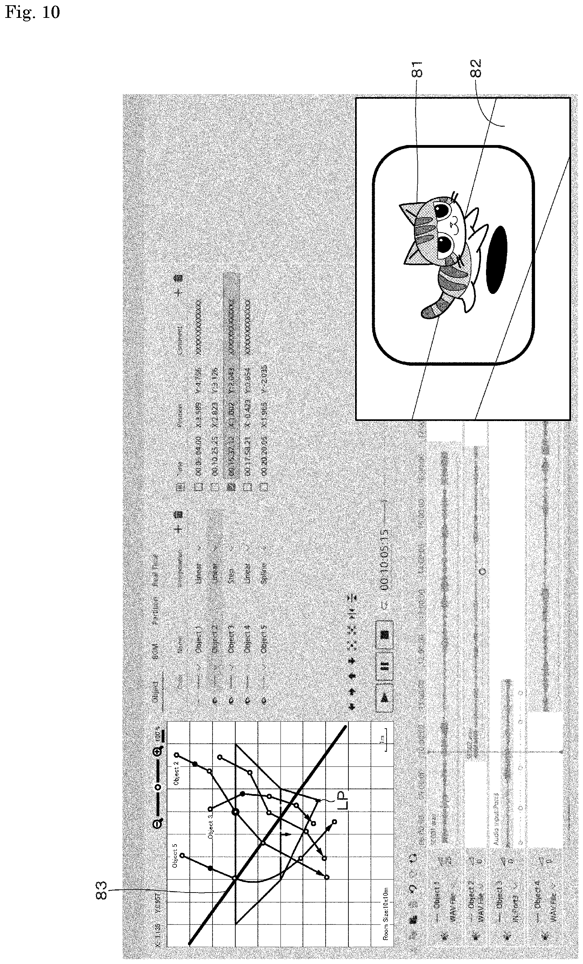

   Fig. 10 is a diagram for explaining a GUI according to a modification.
[Fig. 11]

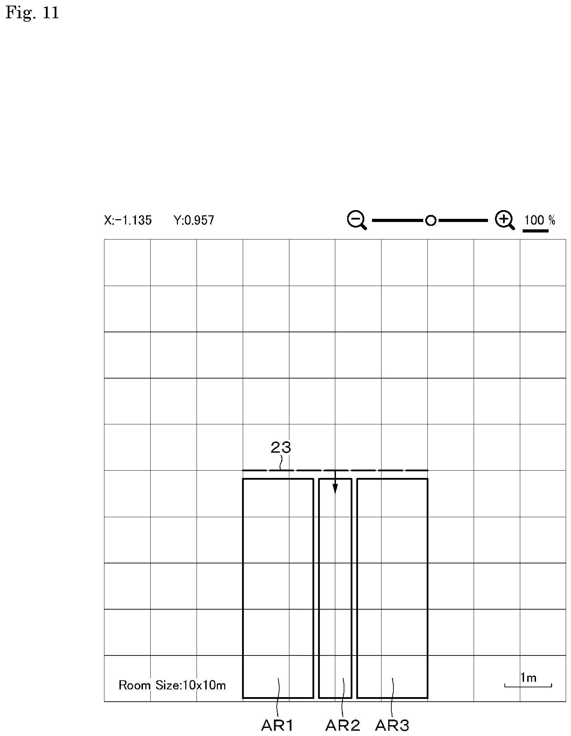

   Fig. 11 is a diagram for explaining an example of a GUI according to a second embodiment.
[Fig. 12]

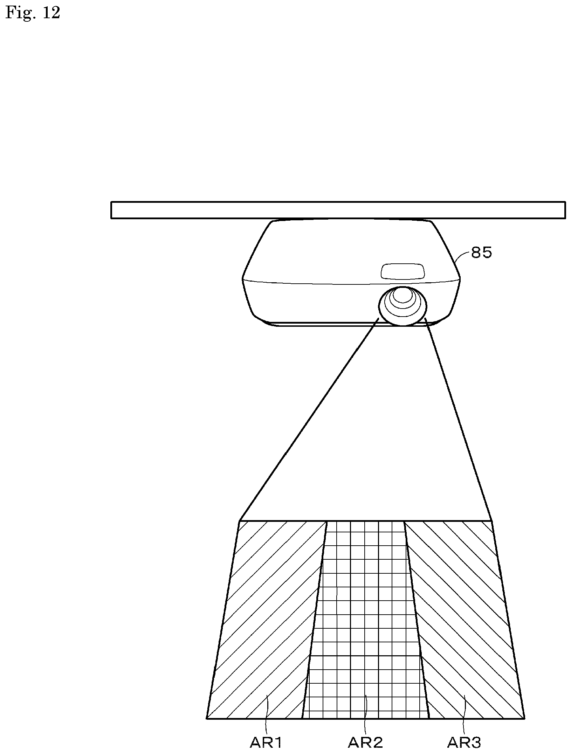

   Fig. 12 is a diagram for explaining an example of a method of reflecting a sound reproduction area onto a real space.
[Fig. 13]

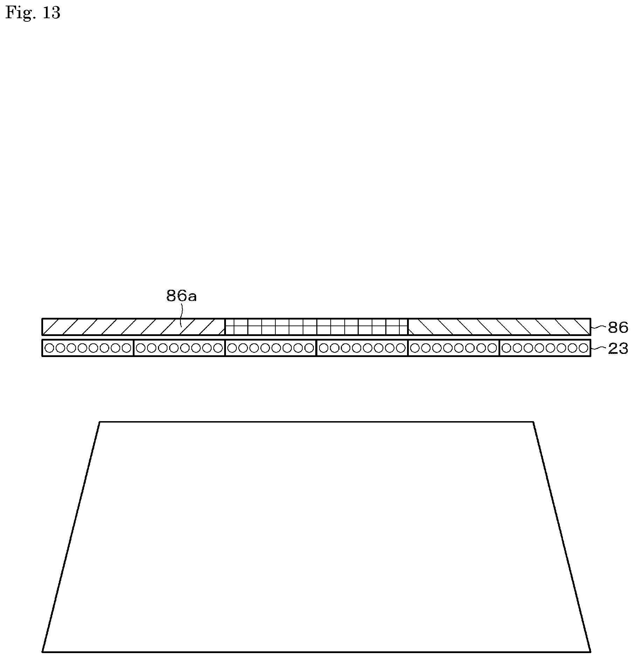

   Fig. 13 is a diagram for explaining another method of reflecting a sound reproduction area onto a real space.
[Fig. 14]

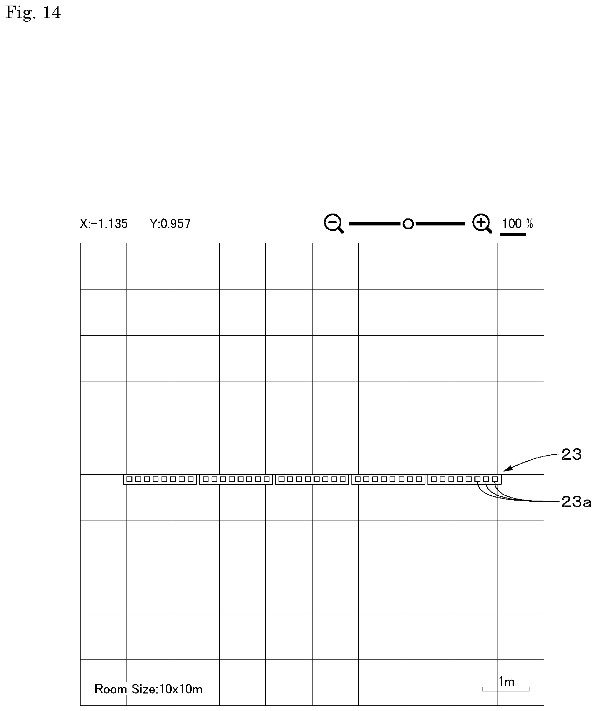

   Fig. 14 is a diagram for explaining a modification.

### [Description of Embodiments]

Hereinafter, embodiments and the like of the present disclosure will be described with reference to the drawings. The description will be given in the following order.

### <First embodiment>

### <Second embodiment>

### <Modifications>

It is to be understood that the embodiments and the like described below are preferable specific examples of the present disclosure and that contents of the present disclosure are not to be limited to such embodiments and the like.

### <First embodiment>

### [Configuration example of reproduction system]

Fig. 1 is a diagram showing a configuration example of a reproduction system (a reproduction system 1A) according to an embodiment. The reproduction system 1A has a personal computer 10 that is an example of a display control apparatus and a reproduction apparatus 20. The personal computer 10 functions as an apparatus that enables intended contents to be readily created, edited, and the like by a content creator or, more specifically, an authoring apparatus used by a content creator to design movements and arrangements of a sound source to be reproduced from the reproduction apparatus 20. It should be noted that the display control apparatus is not limited to a personal computer and may be a tablet computer, a notebook computer, or the like. Data (hereinafter referred to as sound source data 30 when appropriate) that corresponds to at least one sound source is input to the personal computer 10 and the reproduction apparatus 20.

The reproduction apparatus 20 is a reproduction apparatus that reproduces contents. The reproduction apparatus 20 has an interface (I/F) 21 that provides an interface to the outside, a signal processing portion 22, and an array speaker 23. The array speaker 23 has a plurality of (for example, 192 or 256) speaker units. Alternatively, the array speaker 23 may have individual speaker apparatuses arranged at a plurality of locations.

Operations of the reproduction system 1A will be generally described. Authoring related to content creation is performed using the personal computer 10. Details of a GUI (Graphical User Interface) to be used during the authoring will be provided later. Due to the authoring using the personal computer 10, metadata MD (an authoring result file) is generated. The metadata MD is input to the reproduction apparatus 20 via the I/F 21. In addition, as described earlier, the sound source data 30 is input to the reproduction apparatus 20 via the I/F 21.

The signal processing portion 22 performs, based on the metadata MD, processing with respect to the sound source data 30. As signal processing performed with respect to the sound source data 30 based on the metadata MD, known signal processing can be applied. Examples include localization processing in which a sound image of a sound source is localized to a predetermined location and processing for adjusting a reproduction level of a sound source. The sound source data 30 subjected to signal processing by the signal processing portion 22 is supplied to the array speaker 23 and reproduced from the array speaker 23. In this manner, the content is reproduced in a reproduction environment based on the metadata MD.

### [Configuration example of personal computer]

Fig. 2 is a block diagram showing a configuration example of the personal computer 10. For example, the personal computer 10 has a control portion 101, an I/F 102, a communication portion 103, a display portion 104, an input portion 105, and a storage portion 106.

The control portion 101 is constituted by a CPU (Central Processing Unit) or the like and has a ROM (Read Only Memory) and a RAM (Random Access Memory) (not illustrated). The ROM stores a program to be read and executed by the CPU and the like. The RAM is used as a work memory of the CPU. The control portion 101 functions as a display control portion that controls contents to be displayed on the display portion 104 that is a GUI to be described later.

The I/F 102 provides an interface with external apparatuses. For example, the metadata MD generated by the personal computer 10 is supplied to the reproduction apparatus 20 via the I/F 102.

The communication portion 103 is a component used by the personal computer 10 to communicate with other apparatuses and has functions necessary for communication such as an antenna and a modulation/demodulation function. The personal computer 10 can be connected to a network such as the Internet via the communication portion 103.

The display portion 104 is constituted by a liquid crystal display, an organic EL display, or the like. A GUI for authoring to be described later is displayed on the display portion 104. Alternatively, the display portion 104 may be configured as a touch screen that is capable of accepting various kinds of input.

The input portion 105 is a collective term describing components which include a physical button such as a depressible button or a slide button, a keyboard, and a touch screen and which accept an operation input by a user. When an input is made to the input unit 105, an operation signal that corresponds to the input is generated and output to the control portion 101. The control portion 101 executes arithmetic processing, display control, and the like in correspondence with the operation signal. Various settings on the GUI to be described later are made using the input portion 105.

The storage portion 106 is, for example, a hard disk, a memory stick (a registered trademark of Sony Corporation), an SD memory card, or a USB (Universal Serial Bus) memory. The storage portion 106 may be built into the personal computer 10, may be attachable to and detachable from the personal computer 10, or both.

It should be noted that the personal computer 10 may be configured differently from the configuration described above. For example the personal computer 10 may have a speaker apparatus or the like.

### [Example of GUI]

### (Main displays on GUI)

Fig. 3 is a diagram showing an example of a GUI to be displayed on the display portion 104. In addition, Fig. 4 is an enlarged view of a location denoted by a reference sign AA in Fig. 3. In the following description, the location denoted by the reference sign AA will be referred to as an object map when appropriate. The object map is a map that corresponds to a real space in which contents are reproduced based on the metadata MD (a map that corresponds to an X-Y space representing a top view of the real space).

An example of a GUI will be described in detail with reference to Figs. 3 and 4. A position of the array speaker 23 is displayed on the object map. For example, a dotted line that extends in a horizontal direction is displayed near a center of the object map as a position of the array speaker 23. In addition, a listening position LP of a user is displayed. The listening position LP is not limited to the one illustrated location and is appropriately settable. It should be noted that a size of the array speaker 23, a range in which the array speaker 23 is displayed on the GUI, and the like are indicated by reducing an actual reproduction location by a predetermined scale.

The GUI displayed on the display portion 104 includes a display of a time waveform of at least one sound source. In the present embodiment, the GUI includes displays of time waveforms of four sound sources (hereinafter, referred to as object sound sources when appropriate). As shown in Fig. 3, a display 31 related to a time waveform of an object sound source 1, a display 32 related to a time waveform of an object sound source 2, a display 33 related to a time waveform of an object sound source 3, and a display 34 related to a time waveform of an object sound source 4 are displayed. The displays 31 to 34 related to time waveforms are, for example, displayed in a lower part of the display portion 104. It is needless to say that display positions can be changed as appropriate. In addition, the GUI includes a reproduction line PL in a vertical direction that moves from left to right as reproduction time elapses on the displays 31 to 34 related to time waveforms.

It should be noted that the personal computer 10 is configured to be capable of individually or simultaneously reproducing the object sound sources 1 to 4. In addition, the displays 31 to 34 related to time waveforms may be acquired by having the control portion 101 subject each object sound source having been input to the personal computer 10 to FFT (Fast Fourier Transform) or by inputting display data that corresponds to the displays 31 to 34 to the personal computer 10 and having the control portion 101 display the input display data on the display portion 104.

A time axis is displayed under a display related to a time waveform. For example, a time axis LN32a is displayed in parallel under the display 32 related to a time waveform. A mark (hereinafter, referred to as a key frame when appropriate) can be set on the time axis LN32a. In the present embodiment, with the passage of reproduction time of the object sound source 2, five key frames (key frames KF1, KF2, ..., KF5) are set on the time axis LN32a. The key frames KF1 to KF5 on the time axis LN32a correspond to predetermined reproduction timings of the object sound source 2. The key frames KF1 to KF5 are displayed by, for example, circles.

Furthermore, positions of the key frames KF1 to KF5 are settable on the object map. As shown in Fig. 4, the key frames KF1 to KF5 are displayed at set positions. In order to clearly indicate correspondences, the key frames KF1 to KF5 on the object map are also displayed by circles that are similar to those on the time axis LN32a. Accordingly, a position in the reproduction space where sound that corresponds to the object sound source 2 is to be reproduced can be set, the sound to be reproduced at a reproduction timing of a predetermined key frame KF that is attached onto the time axis LN32a. For example, when desiring to reproduce a given reproduction location of the object sound source 2 near the user at the listening position LP, the key frame KF may be set at the reproduction location and, at the same time, the key frame KF may be set near the listening position LP on the object map. In addition, since time waveforms are displayed, authoring that takes positions and intensities of the object sound sources into consideration can be readily performed.

In the present embodiment, a trajectory 38 is set by connecting respective key frames KF by a straight line and the set trajectory 38 is automatically displayed. Therefore, the user can define the trajectory 38 by simply setting key frames KF. The trajectory 38 is a trajectory that indicates a change in a localization point of a sound image of the object sound source 2.

The GUI according to the present embodiment includes a movement mark (hereinafter, referred to as a current position when appropriate) for moving a trajectory. For example, a current position CP moves on the trajectory 38. In Figs. 3 and 4, the current position CP is displayed by a black dot. It is needless to say that the current position CP may be displayed by other shapes (such as a star shape). The current position CP indicates a sound image localization position of the object sound source 2 in accordance with a reproduction timing. Therefore, the current position CP moves on the trajectory 38 with the passage of the reproduction time of the object sound source 2.

For example, the user reproduces the object sound source 2 using the personal computer 10. With the passage of the reproduction time of the object sound source 2, the current position CP moves on the trajectory 38. The display enables the user to visually comprehend how a sound source (more specifically, a position of a sound image that corresponds to the sound source) moves in a reproduction space.

In the present embodiment, the current position CP moves between the respective key frames KF at a constant speed. For example, a movement time of the current position CP is determined based on a difference between respective reproduction timings of the key frames KF1 and KF2. In addition, a distance between the key frames KF1 and KF2 is determined based on respective positions of the key frames KF1 and KF2 on the object map. Based on the determined movement time and distance, a movement speed of the current position CP is automatically set.

It should be noted that a display mode of the current position CP that moves on the trajectory 38 may be changed in accordance with sound intensity of the object sound source 2. For example, a size of the black dot representing the current position CP is increased at a location where the sound is loud (a location where a sound level is high) and the size of the black dot representing the current position CP is reduced at a location where the sound is soft (a location where a sound level is low). Linking the size of the current position CP with the intensity of sound eliminates the need to display a level meter or the like that indicates the intensity of sound on the GUI and promotes more effective use of display space.

As an example of a use case, a case where the object sound source 2 is "sound of dog's running" will be assumed. In the setting example shown in Figs. 3 and 4, the object sound source 2 is actually reproduced such that, to the user at the listening position LP, sound of the dog's running seems to approach the user from a distance on a right side and finally the dog runs away to the left side of the user.

While a display example related to the object sound source 2 has been described above, display related to other object sound sources is performed in a similar manner. The display provides visual comprehension as to how a sound source is arranged in a space.

### (Display related to various settings on GUI)

The larger the number of object sound sources, the larger the number of trajectories shown in the object map and, consequently, the more difficult it may become to identify which object sound source a trajectory corresponds to. In consideration thereof, in the present embodiment, a trajectory that corresponds to each of a plurality of object sound sources is identifiably displayed.

For example, a different color is used for each trajectory that corresponds to each of the plurality of object sound sources. In the present embodiment, colors of trajectories are settable on a same GUI. For example, as shown in Fig. 3, a color that corresponds to each object sound source is settable at a location of a display 51 where a text reading "Color" is being displayed. When a color that corresponds to an object sound source is set, a trajectory that corresponds to the object sound source is displayed in the set color. Furthermore, in the present embodiment, a name of an object sound source is settable. For example, as shown in Fig. 3, a name that corresponds to each object sound source is settable at a location of a display 52 where a text reading "Name" is being displayed. Alternatively, display/non-display of a trajectory that corresponds to an object sound source may be settable. For example, when only the trajectory 38 that corresponds to the object sound source 2 is to be desirably displayed on the object map, only the trajectory 38 that corresponds to the object sound source 2 may be set to "display" and trajectories that correspond to other object sound sources may be set to "non-display".

As described above, by enabling the settings described above and having the control portion 101 perform display control in accordance with the settings, even when there are a large number of object sound sources and a trajectory that corresponds to each object sound source is to be displayed on an object map with a limited region, each object sound source or a trajectory that corresponds to each object sound source can be readily identified.

In addition, in the present embodiment, a movement pattern of the current position CP is settable. For example, at a location of a display 53 which is positioned on a right side of the display 52 and where a text reading "Interpolation" is displayed, a movement pattern of the current position CP is settable. In the present embodiment, three movement patterns are settable as the movement pattern of the current position CP. The three patterns are patterns respectively referred to as, for example, "Linear", "Step", and "Spline".

The pattern referred to as "Linear" is a pattern in which the current position CP described above moves between the respective key frames KF at a constant speed. The pattern referred to as "Step" is a pattern in which the current position CP moves in a stepwise manner. For example, the current position CP that is present on the key frame KF 1 does not move even when a reproduction timing of the object sound source 2 that corresponds to the key frame KF1 passes. In addition, when a current reproduction time reaches the reproduction timing of the object sound source 2 that corresponds to the key frame KF2, the current position CP moves as though jumping over the key frames KF1 and KF2. The pattern referred to as "Spline" is a pattern in which the current position CP moves between the respective key frames KF while tracing a quadratic curve.

It should be noted that settings with respect to each object sound source is performed after pointing a cursor 55 at an object sound source that is a setting object and selecting the object sound source. Fig. 3 shows a state where the cursor 55 is pointed at the object sound source 2 or, in other words, a state where the object sound source 2 has been selected. In this state, settings of a color and a name of a trajectory that corresponds to the object sound source 2, a movement pattern of the current position CP that moves on the trajectory that corresponds to the object sound source 2, and the like can be performed. The cursor 55 is appropriately moved using, for example, the input portion 105.

### (Other displays on GUI)

### "Display of information related to key frame"

Other displays on the GUI will now be described. As described above, by appropriately moving the cursor 55, a predetermined object sound source can be selected. In the present embodiment, information related to the key frame KF that is set with respect to the selected object sound source is displayed. In Fig. 3, a display 61 is shown as information related to the key frame KF. For example, displays of information related to the key frames KF1, KF2, ..., KF5 are arranged in order from the top.

The display 61 includes a display 62 related to a reproduction timing (a reproduction time) that corresponds to the key frame KF and a display 63 related to X-Y coordinates on the object map of the key frame KF. In addition, a display 64 showing a check box is arranged to the left of the display of information related to each key frame KF. By checking a predetermined check box in the display 64, a key frame KF that corresponds to the checked check box can be selected. Fig. 3 shows an example in which a check box that corresponds to the key frame KF3 has been selected or, in other words, an example in which the key frame KF3 has been selected. As shown in Fig. 4, in the present embodiment, the selected key frame KF3 is more emphatically displayed than the other key frames KF. For example, the key frame KF3 is emphatically displayed by a double circle. Due to the display, the user can readily visually identify a position on the object map of the key frame KF selected by the user.

In addition, in the present embodiment, a comment can be set to each key frame KF. For example, a display 65 for setting a comment is arranged to the right of the display 63. The user can select an appropriate key frame KF from the key frames KF1 to KF5 and, using the input portion 105, set a comment with respect to the selected key frame KF. For example, a comment can be set to a key frame KF having been set with a firm intention of arranging an object sound source at a specific position in space at a given reproduction timing. In addition, an intention of a content creator that corresponds to the comment can be readily conveyed to a user of the content. Furthermore, key frames KF can be more readily managed.

### "Display of effective area"

An effective area EAis displayed on the object map. Fig. 5A is a diagram that includes an example of an effective area EA on the object map, and Fig. 5B is a diagram that extracts and shows only the effective area EA included in Fig. 5A.

Even when the metadata MD is generated on the GUI of the personal computer 10, in signal processing performed by the signal processing portion 22 on the side of the reproduction apparatus 20, coefficients to be used in localization processing or the like are finite. In other words, a range over which an effect of signal processing on the side of the reproduction apparatus 20 is obtained is finite. In consideration thereof, in the present embodiment, the range over which the effect of signal processing is obtained is displayed as the effective area EA. When sound is reproduced by wavefront synthesis from the array speaker 23, an area in which wavefront synthesis can be performed is displayed as the effective area EA. Due to the display, the user can visually comprehend an area in which wavefront synthesis can be performed.

### "Display of listening area"

A listening area LA is displayed on the object map. Fig. 5A is a diagram that includes an example of a listening area LA on the object map, and Fig. 5C is a diagram that extracts and shows only the listening area LA included in Fig. 5A. The listening area LA indicates, with respect to a given listening position LP, a range over which sound reproduced from the array speaker 23 is effectively heard. When sound is reproduced by wavefront synthesis from the array speaker 23, the listening area LA indicates an area in which wavefront synthesis is effective with respect to the listening position LP. A shape, a size, and the like of the listening area LA change in accordance with the listening position LP that is set on the object map. Due to the display, the user can visually comprehend an area in which wavefront synthesis is effective with respect to the listening position LP. The trajectories, the effective area EA, and the listening area LA on the object map may be displayed so as to be identifiable. It should be noted that, even though sound reproduced outside the listening area LA is actually audible to the user, a sense of localization that is felt by the user is weaker than in a case of sound reproduced inside the listening area LA.

### [Modifications of first embodiment]

### (First modification)

The GUI described above can be modified as follows. A time waveform of an object sound source that corresponds to a section of predetermined key frames KF can be displayed between the key frames KF. For example, as shown in Fig. 6, a time waveform 68 of the object sound source 2 that corresponds to a section of the key frame KF4 and the key frame KF5 on the object map is displayed by being superimposed on the trajectory 38 between the key frames KF4 and KF5. Due to the display, the user can envision an image of sound to be reproduced between the predetermined key frames KF. Display/non-display of the display may be settable.

### (Second modification)

A floor plan of a venue at which the object sound sources 1 to 4 are actually reproduced may be displayed on the object map. For example, as shown in Fig. 7, as a background of the object map, a floor plan of a concert hall is displayed as a display 71. Due to the display, the user can arrange the object sound sources and the like while being conscious of an actual reproduction environment and arrange sound sources and the like in accordance with a physical arrangement in the actual reproduction environment. For example, when the user desires to reproduce sound (for example, sound of animal's running) that travels from a near side to a far side of an aisle of the concert hall, the key frame KF or a trajectory may be set on the aisle of the concert hall on the object map.

### (Third modification)

As described above, when displaying a reproduction environment on the object map, an acoustic reproduction environment may be displayed on the object map in addition to a physical arrangement. Examples of an acoustic reproduction environment include reflection coefficients of a ceiling, a floor, a wall, and the like of a concert hall. When display of reflection coefficients is turned on, as shown in Fig. 8, a display 72 related to a distribution of reflection coefficients in a predetermined concert hall is displayed. Due to the display, authoring that takes reflection coefficients into consideration can be performed. For example, in order to prevent sound from being reproduced around a location with a large reflection coefficient, the user may set a trajectory that prevents sound from passing near the location with a large reflection coefficient. In this manner, the user can arrange object sound sources and the like using a floor plan of a venue and reflection coefficients as reference. It should be noted that data of a floor plan of a venue and data of reflection coefficients are acquired from outside of the personal computer 10. For example, the communication portion 103 of the personal computer 10 may be used to connect to a network, whereby data of a floor plan of a venue and data of reflection coefficients of the venue can be acquired from a server apparatus on the network.

While an example in which the trajectory 38 is automatically displayed by connecting key frames KF to each other by a straight line has been described above, this example is not restrictive. For example, the user can draw an arbitrary trajectory using the input portion 105, in which case a trajectory in accordance with the input is displayed. A stylus pen, a touch panel, or the like is assumed as the input portion 105. Fig. 9 is a diagram showing a trajectory 75 that is an example of the trajectory described above. For example, the user can input a trajectory by freehand on an input device such as a touch panel while directing his/her point of view toward a moving image (for example, a moving image that is reproduced in synchronization with an object sound source) which is being displayed on a separate monitor to the display portion 104. Accordingly, a trajectory in accordance with a moving body that is displayed on a moving image can be readily imparted.

A moving body inside a moving image may be automatically recognized by image recognition, in which case a trajectory may be automatically generated and displayed in accordance with a recognition result. For example, a case where the object sound source is sound of cat's running will be assumed. As shown at bottom right in Fig. 10, in the moving image, it is assumed that a cat 81 runs on a road 82 from top left to bottom right. It should be noted that the moving image may be displayed together with the GUI, displayed on a display portion that differs from the display portion 104 that displays the GUI, or may not be displayed.

The cat 81 that is a moving body (a moving subject) in the moving image is detected by known subject detection processing and a motion of the cat 81 is detected by known motion detection processing. The image processing is performed by, for example, the control portion 101. Based on the recognition result, the control portion 101 automatically generates a trajectory and displays the generated trajectory. For example, a trajectory 83 is generated so that sound of a cat's running moves from rear left (far left) to front right with respect to the set listening position LP. In addition, the generated trajectory 38 is displayed on the object map. Accordingly, a trajectory of an object sound source in accordance with a moving image can be faithfully and readily created.

### <Second embodiment>

A second embodiment represents an example in which the present disclosure is applied to a reproduction system that uses wavefront synthesis to reproduce a different content for each area while preventing mixing with sounds reproduced in adjacent areas. A configuration that is the same or homogeneous to that of the first embodiment is assigned a same reference sign. In addition, matters described in the first embodiment can also be applied to the second embodiment unless specifically stated to the contrary.

In the present example, a case where sound related to a guidance that is reproduced at a station or an airport is simultaneously reproduced in three languages (Japanese, English, and Chinese) will be assumed. Fig. 11 shows an example of a GUI according to the second embodiment. The array speaker 23 is displayed on an object map. Three sound reproduction areas (sound reproduction areas AR1, AR2, and AR3) with respect to reproduction directions of sound from the array speaker 23 are displayed by, for example, rectangular frames. The sound reproduction area AR1 is an area where, for example, a Japanese voice guidance is audible. In addition, the sound reproduction area AR2 is an area where, for example, an English voice guidance is audible. In addition, the sound reproduction area AR3 is an area where, for example, a Chinese voice guidance is audible. The sound reproduction areas AR1 and the like are sound division areas that are defined by dividing a range where a voice guidance is audible. By appropriately adjusting division patterns, the user can change sizes and shapes of the sound reproduction areas AR1 and the like. Accordingly, the user can visually comprehend how areas are divided. In addition, the sound reproduction areas AR1 and the like can be suitably set in accordance with a location (for example, a tourist destination with a large number of foreigners) where sound is to be reproduced.

The set sound division areas are supplied to the reproduction apparatus 20 as the metadata MD. The signal processing portion 22 of the reproduction apparatus 20 performs predetermined signal processing (for example, the signal processing described in the patent literature described earlier) in accordance with the metadata MD. Accordingly, reproduction of sound in the sound division areas based on the metadata MD is performed.

It should be noted that the sound reproduction areas AR1, AR2, and AR3 may be displayed by changing colors in order to make the sound reproduction areas AR1, AR2, and AR3 identifiable. In addition, the number of divided areas is not limited to three and can be changed as appropriate.

The reproduction apparatus 20 may read area division information that is described in the metadata MD to show how areas are divided in real space. For example, the reproduction apparatus 20 (or another apparatus) has a projector provided on a ceiling. As shown in Fig. 12, a projector 85 reads the area division information and projects colors that respectively correspond to the sound reproduction areas AR1, AR2, and AR3 onto a floor. According to the processing, since the sound reproduction areas AR1 and the like having been set on the GUI are reflected onto a real space, how areas are divided can be visually recognized in the real space.

In addition, as shown in Fig. 13, an LED (Light Emitting Diode) array 86 may be provided on top of the array speaker 23, in which case the sound reproduction areas AR1 and the like can be reflected onto a real space by appropriately setting an emitted color and a lighting range of the LEDs (Light Emitting Diodes). For example, an area in front of an LED with a red emitted color (a location denoted by a reference sign 86a) corresponds to the sound reproduction area AR1 and, when the user is present in front of the red LED, a voice guidance in Japanese becomes audible. It should be noted that, in addition to a speaker unit that corresponds to the location of the red LED, a Japanese voice component is also reproduced at an appropriate level from speaker units that correspond to locations of LEDs of other colors.

### <Modifications>

While a plurality of embodiments of the present disclosure have been described with specificity above, it is to be understood that the contents of the present disclosure are not limited to the embodiments described above and that various modifications can be made based on the technical ideas of the present disclosure. Hereinafter, modifications will be described.

The GUIs according to the embodiments described above may enable a predetermined BGM (Background Music) sound source to be assigned to any of the speaker units of the array speaker 23. For example, as shown in Fig. 14, individual speaker units 23a that constitute the array speaker 23 are displayed on the object map. The user can select the speaker unit 23a from which the BGM sound source is to be reproduced. The BGM sound source is reproduced at a constant level from the selected speaker unit 23a. According to the display, the user can visually comprehend from which speaker unit 23a of the array speaker 23 the BGM is to be output.

The displays on the GUIs described in the embodiments need not all be essential and a part of the displays described above may be omitted or other displays may be added.

Displays related to the GUI described in the first embodiment and displays related to the GUI described in the second embodiment may be made interchangeable.

The display portion on which the GUIs described above are displayed may be a display portion that differs from the display portion included in the personal computer 10. The same description applies to the input portion. In addition, in the embodiments described above, a plurality of array speakers may be provided, in which case sound may be reproduced in a synchronized manner from the respective array speakers.

Configurations presented in the embodiments described above are merely examples and are not limited thereto. It is needless to say that components may be added, deleted, and the like without departing from the spirit and the scope of the present disclosure. The present disclosure can also be realized in any form such as an apparatus, a method, a program, and a system. The program may be stored in, for example, a memory included in the control unit or a suitable storage medium.

The present disclosure can also adopt the following configurations.
(1) A display control apparatus including
   a display control portion configured to display, on a display portion, a position of an array speaker, a time waveform that corresponds to at least one sound source, and a trajectory indicating a variation in a localization point of the sound source in a predetermined space.
(2) The display control apparatus according to (1), wherein
   the display control portion is configured to display a movement mark that moves on the trajectory with the passage of a reproduction time of the sound source.
(3) The display control apparatus according to (2), wherein
   the display control portion is configured to change a display mode of the movement mark in accordance with an intensity of sound that is included in the sound source.
(4) The display control apparatus according to (3), wherein
   the display control portion is configured to change a size of the movement mark in accordance with an intensity of sound that is included in the sound source.
(5) The display control apparatus according to any one of (1) to (4), wherein
   the display control portion is configured to identifiably display respective trajectories that correspond to the plurality of sound sources when there are a plurality of sound sources, each of the sound sources being the sound source.
(6) The display control apparatus according to (5), wherein
   a color of a trajectory that corresponds to each of the plurality of sound sources, display/non-display of the trajectory that corresponds to each of the plurality of sound sources, and a name with respect to each of the plurality of sound sources are settable.
(7) The display control apparatus according to any one of (1) to (6), wherein
   the display control portion is configured to display a venue where the sound source is to be reproduced.
(8) The display control apparatus according to (7), wherein
   the display control portion is configured to display a reflection coefficient of sound in the venue.
(9) The display control apparatus according to any one of (1) to (8), wherein
   the display control portion is configured to display an effective area in which an effect of signal processing with respect to the sound source is obtained.
(10) The display control apparatus according to any one of (1) to (9), wherein
   the display control portion is configured to display a listening area that corresponds to a set listening position.
(11) The display control apparatus according to any one of (1) to (10), wherein
   the display control portion is configured to display a mark indicating a predetermined reproduction timing of the sound source in parallel with the time waveform and display a mark indicating a reproduction location in the space of sound to be reproduced at the reproduction timing.
(12) The display control apparatus according to (11), wherein
   the trajectory is formed by connecting a plurality of marks that are set in correspondence with the sound source.
(13) The display control apparatus according to (11) or (12), wherein
   the display control portion is configured to display a time of a reproduction timing that corresponds to the mark and coordinates that correspond to the reproduction location.
(14) The display control apparatus according to (12), wherein
   a movement pattern of a movement mark that moves between the marks is settable.
(15) The display control apparatus according to any one of (1) to (14), wherein
   a comment with respect to the mark is settable.
(16) The display control apparatus according to any one of (1) to (15), wherein
   the display control portion is configured to display a trajectory that is set in accordance with an input to an input portion.
(17) The display control apparatus according to any one of (1) to (15), wherein
   the display control portion is configured to automatically display the trajectory based on a recognition result with respect to a moving body in a predetermined moving image.
(18) The display control apparatus according to any one of (1) to (17), wherein displays by the display control portion are user interfaces for authoring.
(19) The display control apparatus according to any one of (1) to (18), wherein
   the speaker array is configured to reproduce sound subjected to wavefront synthesis processing.
(20) A display control apparatus including
   a display control portion configured to display, on a display portion, a position of an array speaker and a plurality of reproduction areas that correspond to a plurality of sounds that are reproduced from the array speaker, wherein sizes of the reproduction areas are changeable.
(21) A display control method including
   a display control portion displaying, on a display portion, a position of an array speaker, a time waveform that corresponds to at least one sound source, and a trajectory indicating a variation in a localization point of the sound source in a predetermined space.
(22) A program that causes a computer to execute a display control method including Displaying, by a display control portion on a display portion, a position of an array speaker, a time waveform that corresponds to at least one sound source, and a trajectory indicating a variation in a localization point of the sound source in a predetermined space.

### [Reference Signs List]

10 Personal computer
20 Reproduction apparatus
22 Signal processing portion
23 Array speaker
30 Sound source data
101 Control portion
104 Display portion
105 Input portion

## Claims

1. A display control apparatus comprising
a display control portion configured to display, on a display portion, a position of an array speaker, a time waveform that corresponds to at least one sound source,
and a trajectory indicating a variation in a localization point of the sound source in a predetermined space.

2. The display control apparatus according to claim 1, wherein
the display control portion is configured to display a movement mark that moves on the trajectory with the passage of a reproduction time of the sound source.

3. The display control apparatus according to claim 2, wherein
the display control portion is configured to change a display mode of the movement mark in accordance with an intensity of sound that is included in the sound source.

4. The display control apparatus according to claim 3, wherein
the display control portion is configured to change a size of the movement mark in accordance with an intensity of sound that is included in the sound source.

5. The display control apparatus according to claim 1, wherein
the display control portion is configured to identifiably display respective trajectories that correspond to the plurality of sound sources when there are a plurality of sound sources, each of the sound sources being the sound source.

6. The display control apparatus according to claim 5, wherein
a color of a trajectory that corresponds to each of the plurality of sound sources,
display/non-display of the trajectory that corresponds to each of the plurality of sound sources, and a name with respect to each of the plurality of sound sources are settable.

7. The display control apparatus according to claim 1, wherein
the display control portion is configured to display a venue where the sound source is to be reproduced.

8. The display control apparatus according to claim 7, wherein
the display control portion is configured to display a reflection coefficient of sound in the venue.

9. The display control apparatus according to claim 1, wherein
the display control portion is configured to display an effective area in which an effect of signal processing with respect to the sound source is obtained.

10. The display control apparatus according to claim 1, wherein
the display control portion is configured to display a listening area that corresponds to a set listening position.

11. The display control apparatus according to claim 1, wherein
the display control portion is configured to display a mark indicating a predetermined reproduction timing of the sound source in parallel with the time waveform and display a mark indicating a reproduction location in the space of sound to be reproduced at the reproduction timing.

12. The display control apparatus according to claim 11, wherein
the trajectory is formed by connecting a plurality of marks that are set in correspondence with the sound source.

13. The display control apparatus according to claim 11, wherein
the display control portion is configured to display a time of a reproduction timing that corresponds to the mark and coordinates that correspond to the reproduction location.

14. The display control apparatus according to claim 12, wherein
a movement pattern of a movement mark that moves between the marks is settable.

15. The display control apparatus according to claim 11, wherein
a comment with respect to the mark is settable.

16. The display control apparatus according to claim 1, wherein
the display control portion is configured to display a trajectory that is set in accordance with an input to an input portion.

17. The display control apparatus according to claim 1, wherein
the display control portion is configured to automatically display the trajectory based on a recognition result with respect to a moving body in a predetermined moving image.

18. The display control apparatus according to claim 1, wherein
displays by the display control portion are user interfaces for authoring.

19. The display control apparatus according to claim 1, wherein
the speaker array is configured to reproduce sound subjected to wavefront synthesis processing.

20. A display control apparatus comprising
a display control portion configured to display, on a display portion, a position of an array speaker and a plurality of reproduction areas that correspond to a plurality of sounds that are reproduced from the array speaker, wherein
sizes of the reproduction areas are changeable.

21. A display control method comprising
a display control portion displaying, on a display portion, a position of an array speaker, a time waveform that corresponds to at least one sound source, and a trajectory indicating a variation in a localization point of the sound source in a predetermined space.

22. A program that causes a computer to execute a display control method comprising displaying, by a display control portion on a display portion, a position of an array speaker, a time waveform that corresponds to at least one sound source, and a trajectory indicating a variation in a localization point of the sound source in a predetermined space.
